# FASCICULE DE BREVET EUROPEEN

(11) **EP 0 537 444 B1**
(45) Date de publication et mention de la délivrance du brevet: **18.09.1996**
(21) Numéro de dépôt: 92114068.7
(22) Date de dépôt: 18.08.1992
(51) Int. Cl.: H04L 12/40, H04L 12/42

(54) **Dispositif de raccordement d'un réseau de transmission de données à une pluralité d'abonnés**
Vorrichtung zum Verbinden eines Übertragungsnetzes mit einer Vielzahl von Teilnehmern
Apparatus for connecting a transmission network to a plurality of terminals

(30) Priorité: 22.08.1991 FR 9110521
(43) Date de publication de la demande: 21.04.1993
(73) Titulaire: CEGELEC, F-92309 Levallois-Perret (FR)
(72) Inventeur: Gelin, Claude, F-94000 Creteil (FR)
(74) Mandataire: Weinmiller, Jürgen

(56) Documents cités:
- EP-A- 0 419 713
- PATENT ABSTRACTS OF JAPAN vol. 8, no. 63 (E-233)(1500) 24 Mars 1984 & JP-A-58212245

## Description

Le domaine de l'invention est celui des dispositifs de raccordement d'un réseau de transmission de données à une pluralité d'abonnés, un abonné étant constitué par un émetteur et/ou un récepteur de données.

De façon connue, les bus de transmission de données peuvent véhiculer sur un ou plusieurs conducteurs des données, par exemple numériques entre d'une part des capteurs et des actionneurs (vannes, moteurs, pompes,...) et d'autre part des organes de gestion tel que des automates programmables, des microprocesseurs- ou des calculateurs spécifiques.

De tels bus de transmission sont par exemple utilisés pour permettre la communication entre des éléments de ce type utilisés pour la gestion de l'habitat (application domotique). Le raccordement des différents éléments à un bus de transmission commun à tous les éléments remplace avantageusement les câblages point à point (réseau en étoile) utilisant la norme de fait 4-20 milliampères. Le coût du câblage est moins important du fait de la réduction de la longueur des fils de connexion, les perturbations électromagnétiques sont pratiquement éliminées et l'installation s'en trouvé grandement facilitée.

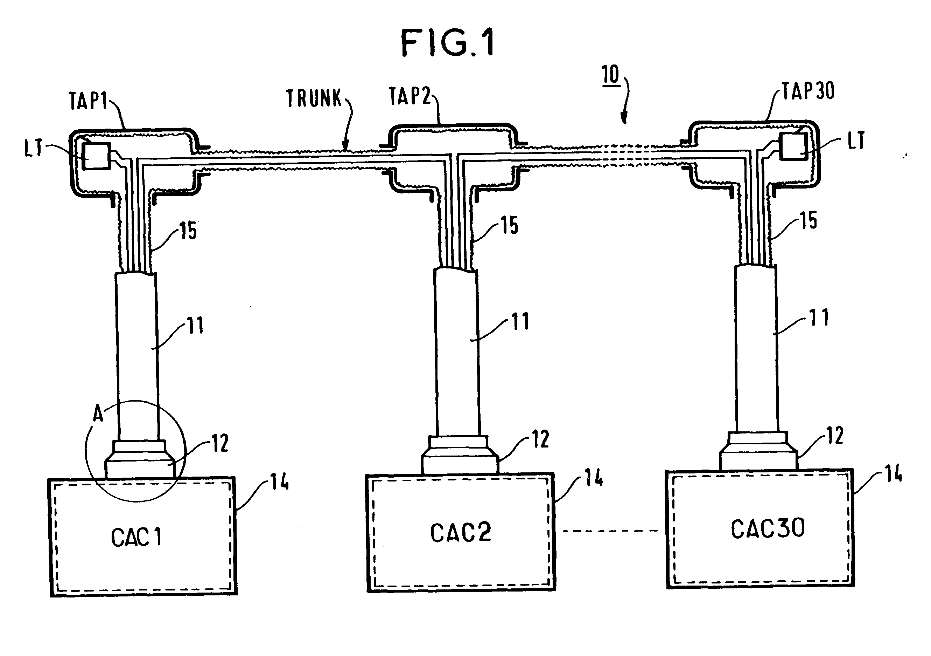

Ce type de réseau est également utilisé dans les réseaux de terrain permettant les automatisations des unités de fabrication de produits. La connexion d'un élément (capteur, actionneur, calculateur industriel,...) au bus de transmission de données, appelé câble principal ou encore TRUNK, est réalisé conformément à la figure 1.

La figure 1 représente un réseau de terrain comprenant une pluralité d'abonnés.

Un réseau de terrain 10, par exemple de type FIP (Flux d'Informations Procèdè ou, en anglais, Factory Information Protocol), est composé d'un câble principal véhiculant des données en série sur deux conducteurs électriques torsadés formant une paire de signaux. Les données sont véhiculées entre des abonnés CAC1,CAC2,...,CAC30 constitués chacun par un capteur, un actionneur, ou un calculateur. La liaison entre les abonnés est réalisée à l'aide de dispositifs de dérivation. Un tel dispositif est communément appelé TAP.

Les deux extrémités de la liaison TRUNK sont constituées par des moyens LT d'adaptation de la ligne de transmission compris chacun dans les TAP d'extrémité de ligne TAP1 et TAP30.

Les dérivations effectuées par les TAP consistent à couper la liaison TRUNK, à insérer un TAP au niveau de la coupure et à relier entre eux les deux côtés de la liaison au niveau de chaque abonné CAC1 à CAC30 comme représenté en figure 1A. On évite ainsi une désadaptation de ligne qui se produirait en cas de simple dérivation de la liaison TRUNK vers un abonné.

Les liaisons entre chaque TAP et chaque abonné sont assurées par des câbles 11 identiques dont l'extrémité opposée au TAP est pourvue d'une prise 12 de connexion. La fiche 12 représentée sur la figure 1A comporte deux bornes de connexion 13 sur lesquelles les fils issus du TAP sont connectés deux à deux afin d'assurer une continuité du circuit électrique. Les fils de blindage ne sont pas représentés.

Sur la figure 1, les pointillés 14 représentent le blindage électromagnétique des abonnés relié au blindage 15 des liaisons 11.

Le réseau 10 comporte donc autant de TAP que d'abonnés CAC.

Le principal inconvénient de ce type de réseau est qu'à chaque nouvel ajout d'abonné, par exemple pour connecter des capteurs et actionneurs d'une nouvelle machine à la ligne TRUNK, il est nécessaire de réaliser l'insertion d'un nouveau TAP sur la ligne TRUNK. Or, les TAP sont des boîtiers de dérivation coûteux car ils doivent répondre à des normes spécifiques, de solidité et de sécurité notamment. De plus, dans certains cas, les liaisons de type TRUNK sont enterrées et il est alors nécessaire de les déterrer pour y insérer un ou plusieurs TAP, d'où des contraintes importantes en plus du temps nécessité pour réenterrer la liaison TRUNK.

Par ailleurs, il n'est pas possible de profiter d'une liaison de type 11 déjà existante pour y brancher en parallèle une autre liaison allant vers un abonné à ajouter à l'installation déjà existante, du fait de la désadaptation de ligne qui serait ainsi réalisée.

L'abrégé de brevet japonais n°58.212245 au nom de FUJI XEROX K.K. décrit un dispositif de raccordement d'abonnés pour bus principal constitué par une-dérivation de ce bus. Les abonnés sont raccordés en série à la dérivation par l'intermédiaire de connecteurs. Cette solution présente l'inconvénient décrit précédemment, c'est à dire que la connexion de ce dispositif de raccordement au bus principal entraîne une désadaptation de ce bus (les abonnés sont reliés en série au bus). Le problème d'adaptation d'impédance n'est pas abordé dans ce document car chaque abonné peut avoir sa propre impédance d'entrée et de plus, tous les abonnés doivent être connectés au dispositif de raccordement pour assurer sa continuité.

La présente invention a notamment pour objectif de pallier ces inconvénients.

Plus précisément, un des objectifs de l'invention est de fournir un dispositif de raccordement pour bus de terrain permettant d'ajouter rapidement et aisément au moins deux abonnés à ce bus, sans créer de désadaptation du bus.

Un autre objectif de l'invention est de fournir un tel dispositif de raccordement qui soit moins coûteux et plus facile à réaliser que ceux employés dans l'état de la technique.

Ces objectifs, ainsi que d'autres qui apparaîtront par la suite, sont atteints grâce à un dispositif conforme à la revendication 1.

Avantageusement, les secondes branches d'un même bus tertiaire sont reliées entre elles à l'aide d'un moyen de connexion comprenant au moins une fiche dans laquelle les secondes branches sont reliées entre elles.

Ces fiches sont préférentiellement normalisées suivant un standard et comportent soit quatre, soit neuf broches de connexion.

Préférentiellement, le dispositif est préfabriqué et constitué d'un nombre prédéterminé de seconds dispositifs de dérivation menant chacun à un moyen de connexion.

Ce dispositif peut ainsi être réalisé en usine et on obtient ainsi une fiabilité des connexions bien plus importante que lorsqu'on effectue in situ une dérivation du bus principal pour y connecter un abonné.

Selon un mode de réalisation préférentiel, le bus principal est constitué de deux conducteurs électriques véhiculant des données en différentiel entre les abonnés et d'une liaison de masse.

Préférentiellement, la liaison de masse du bus principal est raccordée à une liaison de masse d'au moins un des bus secondaires à travers un des premiers dispositifs de dérivation comportant des férules conductrices solidarisant les liaisons de masse au premier dispositif de dérivation.

Avantageusement, la guirlande comporte également au moins un second dispositif de dérivation fournissant deux secondes branches d'un bus tertiaire, les secondes branches étant appliquées à une interface d'amplification suivie d'une autre guirlande comportant des moyens d'adaptation d'impédance.

Préférentiellement, le dispositif de l'invention est monté dans une armoire ou coffret de réception des abonnés et sa connexion avec les premières branches issues des premiers dispositifs de dérivation est assurée par une fiche auto-bouclante.

Il est alors aisé d'accéder aux différents abonnés reliés à un même dispositif de dérivation.

L'invention concerne également un réseau de terrain de type FIP (Flux d'Informations Procèdè ou, en anglais, Factory Information Protocol) comprenant un bus principal interrompu par des premiers dispositifs de dérivation pour constituer des bus secondaires composés chacun de deux premières branches, le réseau comportant au moins un dispositif de raccordement selon l'une des caractéristiques précédentes.

D'autres caractéristiques et avantages de l'invention apparaîtront à la lecture de la description suivante d'un mode de réalisation préférentiel, donné à titre illustratif et non limitatif, et des dessins annexés dans lesquels :
- la figure 1 représente un réseau de terrain de type connu ;
- la figure 1A représente les moyens de connexion d'un TAP à un abonné ;
- la figure 2 représente un réseau de terrain équipé du dispositif selon l'invention ;
- la figure 3 est une vue en coupe d'un exemple de connecteur utilisé dans le dispositif de la figure 2 ;
- la figure 4 représente le dispositif de raccordement selon l'invention ;
- la figure 5 est une vue de dessus d'un dispositif de dérivation utilisé dans le dispositif de raccordement selon l'invention.

Les figures 1 et 1A ont été décrites précédemment en référence à l'état de la technique.

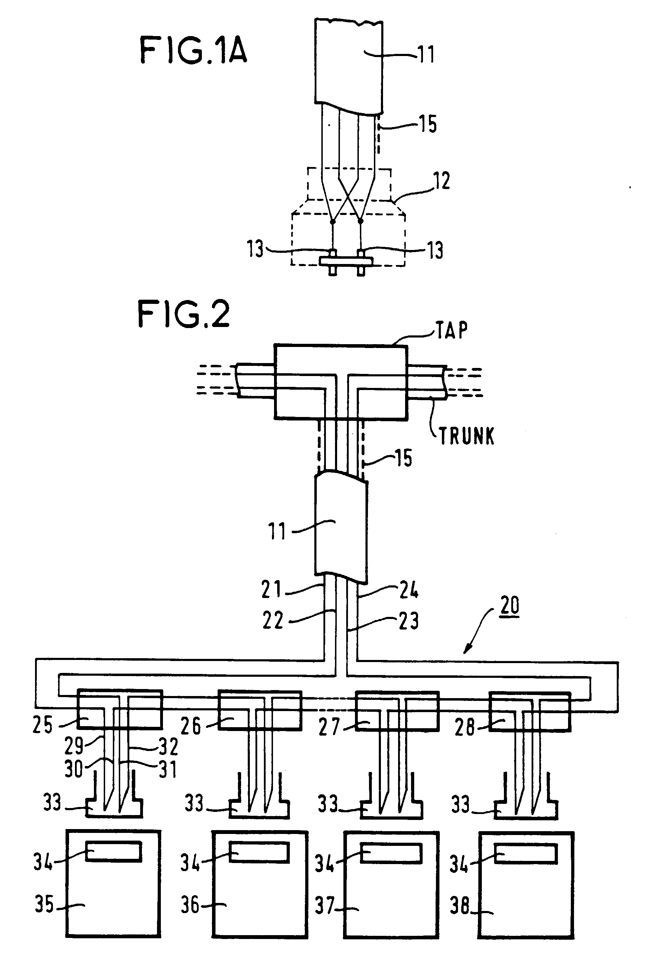

La figure 2 représente un réseau de terrain équipé du dispositif selon l'invention.

Un bus principal TRUNK est interrompu par un certain nombre de dispositifs de dérivation. Seul un dispositif de dérivation TAP est représenté. Le bus principal TRUNK est par exemple constitué de deux conducteurs électriques, les deux conducteurs véhiculant des signaux numériques en différentiel et le blindage en assurant la protection contre les perturbations électromagnétiques. La dérivation effectuée consiste à sectionner les conducteurs du bus principal TRUNK et à y connecter, par soudage ou épissurage, d'autres conducteurs électriques. Dans ce mode de réalisation, on obtient ainsi quatre conducteurs électriques respectivement notés 21, 22, 23 et 24. On peut poser que les conducteurs 21 à 24 véhiculent les informations alors que le blindage 15 est relié à une masse commune du réseau de terrain. Les conducteurs 21 à 24 sont contenus dans un manchon isolant 11 pourvu d'un blindage électromagnétique. Toutes les connexions d'un tel réseau sont blindées.

Les conducteurs 21 à 24 constituent un bus secondaire identifié par deux branches 21, 22 et 23, 24.

Selon l'invention, un dispositif de raccordement 20 est connecté au bus secondaire 21 à 24 pour relier des abonnés 35 à 38 au bus principal TRUNK. Le dispositif de raccordement 20 est constitué d'une guirlande comportant autant de seconds dispositifs de dérivation 25, 26, 27, 28 qu'il y a d'abonnés 35 à 38 à connecter au bus principal TRUNK. Ces seconds dispositifs de dérivation peuvent être considérés comme étant des TAP miniatures, encore appelés microtaps.

Chaque microtap effectue une dérivation des conducteurs qui lui sont présentés, cette dérivation ayant pour objet de présenter les conducteurs électriques à un abonné. Sur la figure 2, le microtap 25 permet d'obtenir un bus tertiaire composé des portions de conducteur 29 à 32. Ces conducteurs constituent respectivement deux à deux des secondes branches. Les extrémités de chaque branche sont reliées de façon à fermer le bus à proximité immédiate d'un abonné. La continuité du bus est ainsi assurée de façon optimale sans que l'introduction d'abonnés ne perturbe le bus de transmission TRUNK.

En effet, le bus secondaire constitué par les liaisons 21 à 24 présente une impédance caractéristique égale à celle du bus TRUNK et masque ainsi l'intégration d'abonnés au niveau des liaisons entre les extrémités des conducteurs 29 à 32. De plus, comme le bus secondaire 21 à 24 peut avoir une longueur importante, la mise en parallèle à l'aide des fiches 33 de plusieurs abonnés 35 à 38 ne perturbe pas le fonctionnement du bus TRUNK. Les abonnés présentent des impédances d'entrée élevées par rapport à l'impédance du bus de sorte que la mise en parallèle par leurs connecteurs 33 (fiche femelle) et 34 (embase mâle) de plusieurs abonnés ne perturbe pas le nouveau bus ainsi créé. On conserve ainsi l'adaptation d'impédance tout le long du réseau.

Avantageusement, les liaisons entre les extrémités des secondes branches et les abonnés sont réalisées à l'aide de fiches 33 normalisées à 4 ou 9 broches de connexion.

Ces fiches 33 coopèrent avec d'autres fiches 34 idoines comprises dans les abonnés 35 à 38.

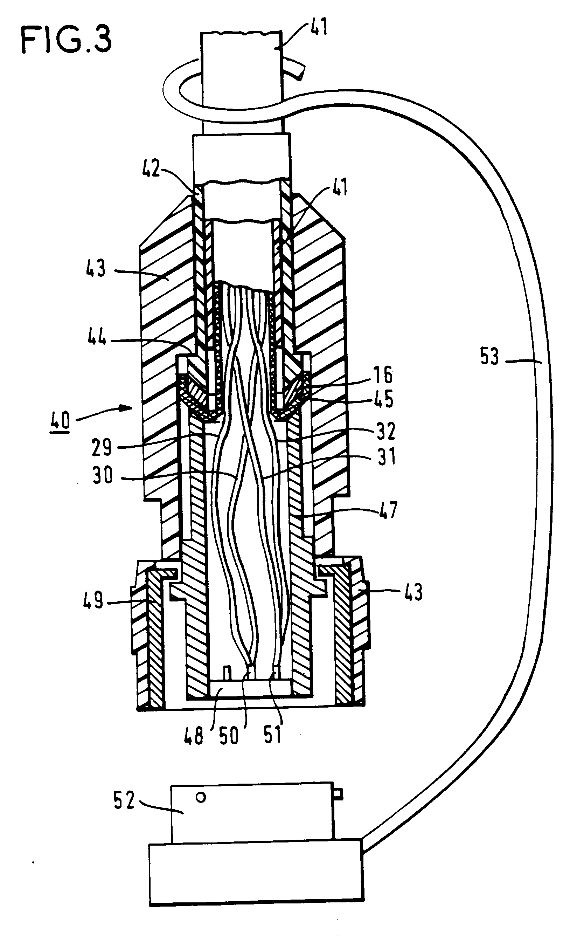

La figure 3 est une vue en coupe d'un connecteur à quatre broches assurant à la fois la continuité du bus et la liaison avec un abonné. Les connecteurs 33 de la figure 2 peuvent par exemple être de ce type.

Le connecteur 40 représenté est un connecteur à quatre broches dont seulement deux sont utilisées dans la présente invention. Les deux broches libres peuvent par exemple servir pour une télé-alimentation.

Le connecteur reçoit la gaine isolante 41 du bus tertiaire dans un passe-câble formant presse-étoupe 42. Le passe-câble 42 est enfermé dans un corps isolant 43 formant un écrou de serrage. Un point de compression 44 assure l'étanchéité du connecteur. Le bus tertiaire comporte un blindage 45 dont l'extrémité pénètre dans une férule 16 de reprise de blindage pour assurer la liaison entre le blindage 45 et une coquille métallique 47 en forme de manchon dont l'extrémité inférieure assure la continuité de blindage avec une embase 48 comprenant quatre plots à souder ou à sertir. Une douille 49 d'accouplement à baïonnette recouverte de matériau isolant 43 coopère avec une fiche non représentée reliée à un abonné.

Les câbles 29 et 30 sont soudés ou sertis sur un plot 50 et les câbles 31 et 32 sur un autre plot 51.

La fiche représentée coopère avantageusement avec un bouchon 52 de masse isolé extérieurement lorsque la fiche n'est pas utilisée. Le bouchon 52 comporte une lanière 53 enclipsée autour du bus tertiaire évitant sa perte.

Bien entendu, d'autres types de fiches peuvent être utilisés, en respectant cependant les contraintes imposées aux réseaux de terrain. Il est également possible de connecter directement les câbles 29 à 32 à l'abonné, sans l'intermédiaire d'une fiche.

L'utilisation d'une fiche est cependant préférable, d'une part pour des raisons évidentes de commodité d'utilisation, et d'autre part pour des raisons de fiabilité. En effet, il est préférable d'utiliser une guirlande toute faite, fabriquée et testée en usine, plutôt que de permettre des interventions sur site pouvant entraîner des dysfonctionnements.

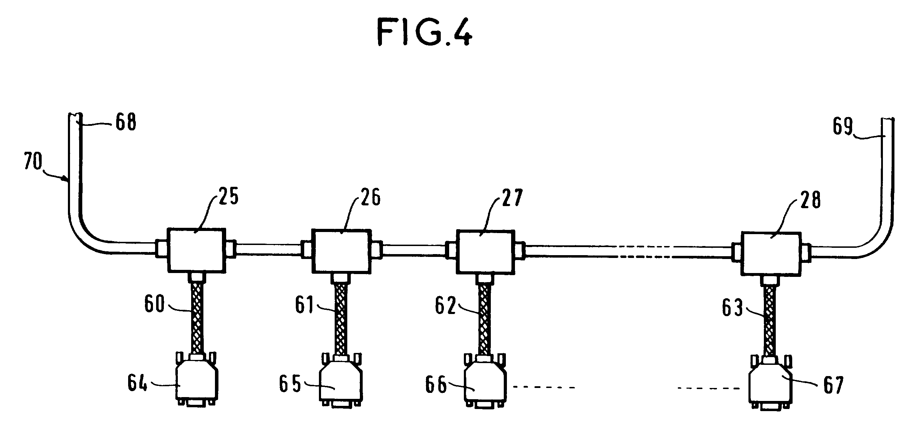

Le dispositif de raccordement selon l'invention se présente avantageusement sous la forme représentée à la figure 4.

La guirlande comporte des microtaps 25 à 28 dérivant un bus secondaire 70 issu d'un TAP situé sur un bus principal. Les bus tertiaires 60 à 63 obtenus par dérivation, se terminent par des fiches 64 à 67 destinées à être enfichées dans des abonnés. Les extrémités 68, 69 de la guirlande sont soit raccordées directement à l'intérieur d'un TAP au bus principal, soit terminées par un connecteur coopérant avec une fiche auto-bouclante formant l'extrémité d'un bus secondaire. Les longueurs des bus tertiaires 60 à 63 sont préférentiellement courtes, de l'ordre de quelques dizaines de centimètres.

Selon ce dernier mode de réalisation, la guirlande est destinée à être incluse dans une armoire ou un coffret éloigné du bus principal du réseau de terrain et reliée d'une part à différents abonnés sous forme de cartes électroniques comprises dans ce coffret et d'autre part au bus principal via une fiche auto-bouclante formant l'extrémité d'un bus secondaire.

La déportation des microtaps permet notamment de simplifier leur réalisation par rapport à celle des TAP du bus principal TRUNK et notamment d'obtenir un encombrement plus réduit. Les microtaps sont également moins lourds et ne doivent pas être aussi résistants que les TAP, d'où un prix de revient plus réduit.

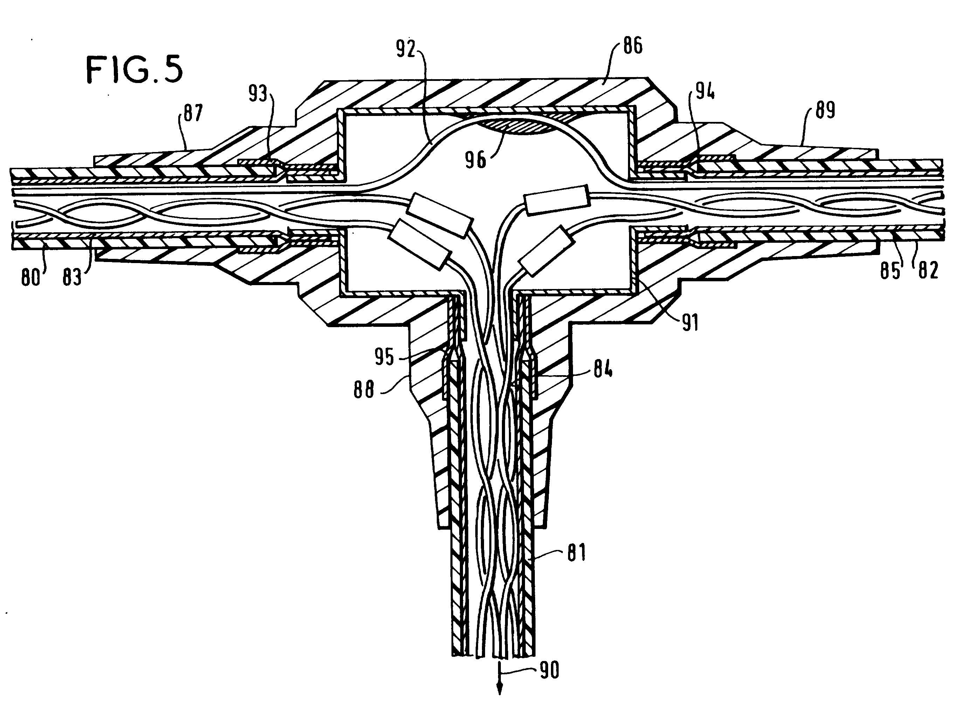

Les microtaps sont avantageusement réalisés conformément à la figure 5. La figure 5 est une vue de dessus d'un dispositif de dérivation utilisé dans la guirlande selon l'invention.

Le microtap représenté reçoit deux câbles 80 et 82. L'un de ces câbles peut par exemple être relié directement à un TAP situé en amont ou alors à un autre microtap. Le microtap assure la dérivation des conducteurs électriques des deux câbles vers une prise située du côté de la flèche 90, les quatre conducteurs étant compris dans un câble 81. Les tresses de blindage 83, 84, 85 des câbles 80, 81 et 82 sont reliées à un boîtier de blindage 91 métallique.

Le boîtier de blindage 91 est recouvert d'un surmoulage isolant 86 enserrant les extrémités des câbles 80, 81 et 82 à l'aide de manchons 87, 88, 89 issus du surmoulage isolant 86. Les surmoulages assurent la rétention et l'amortissement des rayons de courbure de ces câbles.

Les câbles 80 et 82 comprennent un drain 92 de masse continu constitué d'un câble dénudé qui, avantageusement, passe entre les deux conducteurs de chacun des câbles 80 et 82. Ce drain 92 de masse est en contact électrique avec les tresses de blindage 83 et 85 qui sont reliées au boîtier 91 à l'aide de férules 93, 94 en cuivre. La tresse de blindage 84 du câble 81 est également reliée au boîtier 91 à l'aide d'une férule 95.

Les férules 93 à 95 permettent de relier aisément les conducteurs de masse des câbles au boîtier. Le drain 92 de masse est avantageusement fixé par une brasure 96 à l'intérieur du boîtier 91.

La présence d'un tel drain 92 de masse continu permet de conférer au dispositif de l'invention une masse d'excellente qualité puisqu'elle n'est pas interrompue sur le câble principal. Ce câble principal peut également être le bus TRUNK précédemment cité et le boîtier 91 correspond alors à un TAP.

Comme précédemment mentionné, l'impédance du câble 81 est égale à celle des câbles 80 et 82 de telle sorte qu'aucune désadaptation n'est introduite.

Le dispositif de raccordement de l'invention (figure 4) peut également être placé sur la voie de dérivation d'un microtap, au lieu de celle d'un TAP. Il est alors nécessaire d'insérer un dispositif régénérateur entre les extrémités de la guirlande et le bus tertiaire issu du microtap. Ce dispositif fournit des signaux régénérés au réseau constitué par la seconde guirlande située en aval d'une première guirlande. Dans certains cas, des terminaisons de ligne de type LT (figure 1) seront nécessaires au niveau de ce nouveau réseau, notamment lorsque le nombre d'abonnés raccordés est important. Il est ainsi possible d'imbriquer plusieurs guirlandes selon l'invention au niveau d'un tel TAP.

Le bus de transmission de signaux est préférentiellement du type série mais des bus parallèles peuvent également être réalisés suivant la même technologie.

La présente invention étant destinée aux bus industriels, toutes les liaisons sont avantageusement doublées pour palier une éventuelle coupure d'un câble. On utilise alors deux bus principaux, deux fois plus de TAP et de microtaps et des doubles connecteurs au niveau des abonnés.

## Revendications

1. Dispositif de raccordement d'un réseau de transmission de données, dit de terrain, à une pluralité d'abonnés qui lui sont raccordés en parallèle et qui possèdent une impédance d'entrée élevée par rapport à l'impédance caractéristique dudit réseau, ledit réseau comprenant un bus, dit bus principal, ledit bus principal comprenant notamment deux conducteurs électriques véhiculant une paire de signaux, des premiers dispositifs de dérivation étant insérés sur ledit bus principal pour constituer des bus secondaires composés chacun de deux premières branches (21,24;22,23), chacune desdites premières branches (21,24;22,23) étant obtenue par sectionnement et prolongation des extrémités desdits conducteurs électriques dudit bus principal,
caractérisé en ce que ledit dispositif (20) de raccordement est constitué d'une guirlande comprenant au moins deux seconds dispositifs (25,26,27,28) de dérivation insérés entre lesdites premières branches (21,24;22,23), chaque second dispositif (25,26,27,28) de dérivation permettant d'obtenir un bus tertiaire (29,30,31,32) composé de deux secondes branches (29,30;31,32), chaque bus tertiaire (29,30,31,32) étant destiné au raccordement d'un abonné (35,36,37,38) et lesdites secondes branches (29,30;31,32) de ce bus tertiaire (29,30,31,32) étant reliées entre elles au niveau de raccordement d'abonné (35,36,37,38) de façon à assurer une continuité dudit réseau de terrain et à conserver l'adaptation d'impédance au long dudit réseau.

2. Dispositif selon la revendication 1, caractérisé en ce que lesdites secondes branches (29,30;31,32) d'un même bus tertiaire (29,30,31,32) sont reliées entre elles à l'aide d'un moyen (33,64,65,66,67) de connexion comprenant au moins une fiche dans laquelle lesdites secondes branches (29,30;31,32) sont reliées entre elles.

3. Dispositif selon l'une des revendications 1 et 2, caractérisé en ce que qu'il est préfabriqué et constitué d'un nombre prédéterminé de seconds dispositifs (25,26,27,28) de dérivation menant chacun à un moyen (33,64, 65,66,67) de connexion.

4. Dispositif selon l'une des revendications 1 à 3, caractérisé en ce que ledit bus principal (TRUNK) est constitué de deux conducteurs électriques véhiculant des données entre lesdits abonnés (35,36,37,38) et d'une liaison de masse (15).

5. Dispositif selon la revendication 4, caractérisé en ce que la liaison de masse (83,85) dudit bus principal (TRUNK) est raccordée à une liaison de masse (84) d'au moins un (81) desdits bus secondaires à travers un (91) desdits premiers dispositifs de dérivation comportant des férules (93,94,95) conductrices solidarisant lesdites liaisons de masse (83,84,85) audit premier dispositif de dérivation (91).

6. Dispositif selon l'une des revendications 1 à 5, caractérisé en ce que ladite guirlande (20) comporte également au moins un dispositif de dérivation fournissant deux secondes branches d'un bus tertiaire, lesdites secondes branches étant appliquées à une interface d'amplification suivie d'une autre guirlande comportant des moyens d'adaptation d'impédance.

7. Dispositif selon l'une des revendications 1 à 6, caractérisé en ce qu'il est monté dans une armoire ou coffret de réception desdits abonnés (35,36,37,38) et en ce que sa connexion avec lesdites premières branches (21,22;23,24) issues desdits premiers dispositifs (TAP) de dérivation est assurée par une fiche auto-bouclante.

8. Réseau de terrain de type FIP, c-à-d. Flux d'Informations Procédé ou, en anglais Factory, Information Protocol, comprenant un bus principal (TRUNK) interrompu par des premiers dispositifs (TAP) de dérivation pour constituer des bus secondaires (21,22,23,24) composés chacun de deux premières branches (21,22;23,24), caractérisé en ce qu'il comporte au moins un dispositif (20) de raccordement selon l'une des revendications 1 à 7.

## Patentansprüche

1. Vorrichtung zum Anschluß eines Datenübertragungsnetzes an mehrere Endstellen, die an das Netz parallel angeschlossen sind und eine hohe Eingangsimpedanz im Vergleich zur charakteristischen Impedanz des Netzes besitzen, wobei das Netz einen Hauptbus enthält, der insbesondere zwei ein Signalpaar übertragende elektrische Leiter aufweist, und wobei erste Ableitvorrichtungen in den Hauptbus eingefügt sind, um Sekundärbusleitungen zu bilden, die je aus zwei ersten Zweigen (21, 24; 22, 23) bestehen, wobei jeder erste Zweig (21, 24; 22, 23) durch Auftrennen der Hauptbusleitung und Verlängerung der Enden der elektrischen Leiter erhalten wird, dadurch gekennzeichnet, daß die Anschlußvorrichtung (20) aus einer Kette besteht, die mindestens zwei zweite Ableitvorrichtungen (25, 26, 27,28) enthält, welche zwischen die ersten Zweige (21, 24; 22, 23) eingefügt sind, daß jede zweite Ableitvorrichtung (25, 26, 27, 28) einen tertiären Bus (29, 30, 31, 32) ergibt, der aus zwei zweiten Zweigen (29, 30; 31, 32) besteht, daß jeder tertiäre Bus (29, 30, 31, 32) zum Anschluß einer Endstelle (35, 36, 37, 38) bestimmt ist und die zweiten Zweige (29, 30; 31, 32) der tertiären Busleitung (29, 30, 31 32) in Höhe des Endstellenanschlusses (35, 36, 37, 38) so verbunden sind, daß sich eine Kontinuität des Netzes ergibt und die Impedanzanpassung entlang des Netzes erhalten bleibt.

2. Vorrichtung nach Anspruch 1, dadurch gekennzeichnet, daß die zweiten Zweige (29, 30; 31, 32) einer Tertiärbusleitung (29, 30, 31, 32) miteinander über ein Anschlußmittel (33, 64, 65, 66, 67) verbunden sind, das mindestens einen Stecker enthält, in dem die zweiten Zweige (29, 30, 31, 32) miteinander verbunden sind.

3. Vorrichtung nach einem der Ansprüche 1 und 2, dadurch gekennzeichnet, daß sie vorgefertigt ist und eine vorbestimmte Anzahl von zweiten Ableitvorrichtungen (25, 26, 27, 28) enthält, die je zu einem Anschlußmittel (33, 64, 65, 66, 67) führen.

4. Vorrichtung nach einem der Ansprüche 1 bis 3, dadurch gekennzeichnet, daß der Hauptbus (Trunk) aus zwei elektrischen Leitern, die Daten zwischen den Endstellen (35, 36, 37, 38) übertragen, und aus einer Masseverbindung (15) besteht.

5. Vorrichtung nach Anspruch 4, dadurch gekennzeichnet, daß die Masseverbindung (83, 85) der Hauptbusleitung (Trunk) an eine Masseverbindung (84) mindestens einer (81) der Sekundärbusleitungen über eine (91) der ersten Ableitvorrichtungen angeschlossen ist, die leitende Ringe (93, 94, 95) enthält, über die diese Masseverbindungen (83, 84, 85) an der ersten Ableitvorrichtung (91) befestigt sind.

6. Vorrichtung nach einem der Ansprüche 1 bis 5, dadurch gekennzeichnet, daß die Kette (20) weiter mindestens eine Ableitvorrichtung enthält, die zwei zweite Zweige einer tertiären Busleitung liefert, die zu einer Verstärkungsschnittstelle gefolgt von einer weiteren Kette mit Impedanzanpassungsmitteln führen.

7. Vorrichtung nach einem der Ansprüche 1 bis 6, dadurch gekennzeichnet, daß sie in einem Schrank oder Koffer montiert ist, der die Endstellen (35, 36, 37, 38) aufnimmt, und daß der Anschluß an die ersten Zweige (21, 22; 23, 24), die von den ersten Ableitvorrichtungen (TAP) kommen, über einen schleifenbildenden Stecker erfolgt.

8. Netz vom Typ FIP (im Englischen Factory Information Protocol), mit einem Hauptbus (Trunk), der durch erste Ableitvorrichtungen unterbrochen ist, um Sekundärbusleitungen (21, 22, 23, 24) zu bilden, die je aus zwei ersten Zweigen (21, 22; 23, 24) bestehen, dadurch gekennzeichnet, daß es mindestens eine Anschlußvorrichtung (20) nach einem der Ansprüche 1 bis 7 enthält.

## Claims

1. Device for connecting a data transmission field network to a plurality of subscribers connected to it in parallel and which have a high input impedance as compared with the characteristic impedance of said network which comprises a main bus comprising two electrical conductors carrying a pair of signals, first drop and insert devices being inserted into said main bus to constitute secondary buses each comprising two first branches (21, 24; 22, 23), each of said first branches (21, 24; 22, 23) being obtained by cutting and extending ends of said electrical conductors of said main bus,
characterised in that said connecting device (20) comprises a cable assembly comprising at least two second drop and insert devices (25, 26, 27, 28) inserted between said first branches (21, 24; 22, 23), each second drop and insert device (25, 26, 27, 28) providing a tertiary bus (29, 30, 31, 32) comprising two second branches (29, 30; 31, 32), each tertiary bus (29, 30, 31, 32) being adapted to connect one subscriber (35, 36, 37, 38) and said second branches (29, 30; 31, 32) of said tertiary bus (29, 30, 31, 32) being interconnected at the subscriber connection (35, 36, 37, 38) so as to ensure continuity of said field network and to maintain impedance matching throughout said network.

2. Device according to claim 1 characterised in that said second branches (29, 30; 31, 32) of the same tertiary bus (29, 30, 31, 32) are connected to each other by connecting means (33, 64, 65, 66, 67) comprising at least one connector in which the second branches (29, 30; 31, 32) are interconnected.

3. Device according to claim 1 or claim 2 characterised in that it is prefabricated and made up of a predetermined number of second drop and insert devices (25, 26, 27, 28) each having connecting means (33, 64, 65, 66, 67).

4. Device according to any one of claims 1 to 3 characterised in that said main bus (TRUNK) comprises two electrical conductors conveying data on a differential link between said subscribers (35, 36, 37, 38) using an earth return (15).

5. Device according to claim 4 characterised in that said earth connection (83, 85) of said main bus (TRUNK) is connected to an earth connection (84) of at least one secondary bus (81) through one of said first drop and insert devices (91) comprising conductive ferrules (93, 94, 95) connecting said earth connections (83, 84, 85) to said first drop and insert device (91).

6. Device according to any one of claims 1 to 5 characterised in that said cable assembly (20) further comprises at least a second drop and insert device providing two second branches of a tertiary bus, said second branches being applied to an amplification interface followed by another cable assembly comprising impedance matching means.

7. Device according to any one of claims 1 to 6 characterised in that it is mounted in a subscriber receive cabinet or rack (35, 36, 37, 38) and connected to said first branches (21, 22; 23, 24) from said first drop and insert devices (TAP) by a self-looping connector.

8. FIP (i.e. "process information flow" or Factory Information Protocol) type field network comprising a main bus (TRUNK) interrupted by first drop and insert devices (TAP) to constitute secondary buses (21, 22, 23, 24) each comprising two first branches (21, 22; 23, 24), characterised in that it comprises at least one connection device (20) as claimed in any one of claims 1 to 7.
